# EUROPÄISCHE PATENTSCHRIFT

(11) **EP 0 927 449 B1**
(45) Veröffentlichungstag und Bekanntmachung des Hinweises auf die Patenterteilung: **19.12.2001**
(21) Anmeldenummer: 97920589.5
(22) Anmeldetag: 11.04.1997
(51) Int. Cl.: H02J 7/16, H02J 7/14, H02P 9/30, H02P 9/10

(54) **EINRICHTUNG ZUR SPANNUNGSREGELUNG**
VOLTAGE CONTROL DEVICE
DISPOSITIF DE REGULATION DE TENSION

(30) Priorität: 19.09.1996 DE 19638357
(43) Veröffentlichungstag der Anmeldung: 07.07.1999
(73) Patentinhaber: ROBERT BOSCH GMBH, 70442 Stuttgart (DE)
(72) Erfinder: KOHL, Walter, D-74348 Lauffen (DE); MITTAG, Rainer, D-70806 Kornwestheim (DE); NASSWETTER, Günter, D-72810 Gomaringen (DE); SUELZLE, Helmut, D-71691 Freiberg (DE)
(86) Internationale Anmeldenummer: DE9700735
(87) Internationale Veröffentlichungsnummer: WO9812792

(56) Entgegenhaltungen:
- EP-A- 0 611 215
- GB-A- 2 243 962
- US-A- 5 497 069
- US-A- 5 512 812
- PATENT ABSTRACTS OF JAPAN vol. 095, no. 005, 30.Juni 1995 & JP 07 046898 A (HITACHI LTD;OTHERS: 01), 14.Februar 1995,

## Beschreibung

Die Erfindung betrifft eine Einrichtung zur Spannungsregelung bei einem von einer Brennkraftmaschine angetriebenen fremderregten Generator mit den Merkmalen des Oberbegriffs des Anspruchs 1. Eine solche Einrichtung ist aus der GB2243962A bekannt geworden.

### Stand der Technik

Es ist bekannt, daß bei Zuschaltung von starken elektrischen Verbrauchern in einem Kraftfahrzeugbordnetz eine starke Belastung des Generators ausgelöst wird. Da die Zuschaltung des elektrischen Verbrauchers zu einem Spannungseinbruch führt, versucht der Spannungsregler durch Erhöhung des Erregerstromes die vom Generator abgegebene Leistung zu erhöhen. Durch diese Vorgehensweise wird das vom Generator verursachte bremsende Moment erhöht, so daß bei kleinen Drehzahlen der Brennkraftmaschine ein Drehzahleinbruch auftreten kann.

Damit ein solcher Drehzahleinbruch möglichst klein gehalten wird, werden bei Systemen, die eine sogenannte Load-Response aufweisen, Maßnahmen getroffen, die verhindern, daß der Generator zu stark belastet wird, dadurch wird auch verhindert, daß ein Drehzahleinbruch bei der Brennkraftmaschine auftritt, da die benötigte elektrische Leistung jedoch nicht mehr bereitgestellt werden kann, kann ein ungewollter Spannungseinbruch auftreten.

Eine Einrichtung zur Regelung der Ausgangsspannung eines von einer Brennkraftmaschine angetriebenen Generators, bei der eine Load-Response-Funktion während der Fahrt (LRF) aktiviert wird, ist aus der US PS 5 262 711 bekannt. Bei diesem bekannten System wird der Erregerstrom nach Zuschalten eines starken Verbrauchers kontinuierlich erhöht, so daß keine starken Drehzahleinbrüche auftreten. Weiterhin wird bei dem bekannten System vorgeschlagen, die Load-Response-Funktion während der Fahrt mit einer Drehzahlauswertung zu verknüpfen, wobei die Erhöhung des Erregerstromes in Abhängigkeit vom Vergleich der gemessenen Drehzahl mit einem Schwellwert erfolgt. Eine Unterdrückung der Load-Response-Funktion unter bestimmten Umständen ist dagegen nicht vorgesehen.

### Vorteile der Erfindung

Die erfindungsgemäße Einrichtung zur Spannungsregelung bei einem von einer Brennkraftmaschine angetriebenen fremderregten Generator mit den Merkmalen des Anspruchs 1 hat den Vorteil, daß die Anzahl, der nach Zuschalten starker elektrischer Verbraucher auftretenden Spannungseinbrüche gegenüber bekannten Systemen deutlich reduziert wird. Erzielt wird dieser Vorteil, indem die Load-Response-Fahrt-Funktion, die während der Fahrt aktiviert ist, unter bestimmten Bedingungen gesperrt wird. Diese Bedingungen beziehen sich auf das Erkennen einer Drehzahlreduzierung, wobei bei fallender Drehzahl die Load-Response-Fahrt-Funktion gesperrt wird, wodurch dann ein rasches Ansteigen des Erregerstromes erhalten wird, das zu einer Leistungsabgabe durch den Generator führt, die einen Spannungseinbruch verhindert. Bei konstanter Drehzahl oder bei steigender Drehzahl bleibt die Load-Response-Fahrt-Funktion dagegen aktiviert und verhindert den Anstieg des bremsenden Moments des Generators auf die Brennkraftmaschine bei Zuschaltung starker Verbraucher.

Weitere Vorteile der Erfindung ergeben sich durch die in den Unteransprüchen angegebenen Maßnahmen. Dabei ist besonders vorteilhaft, daß zur Drehzahlbestimmung das Phasensignal des Generators ausgewertet wird. Damit muß nicht unbedingt die Drehzahl der Kurbelwelle der Brennkraftmaschine ausgewertet werden, allerdings kann es unter gewissen Umständen vorteilhaft sein, dennoch die Drehzahl der Kurbelwelle auszuwerten oder mitzuberücksichtigen.

Weiterhin ist vorteilhaft, daß die Auswertemittel, die die Deaktivierung der Load-Response-Fahrt-Funktion bei Drehzahlreduzierung ermöglichen, als sehr einfache Schaltung mit wenigen elektronischen Bauteilen ausführbar sind. Eine Ausgestaltung, die unter Zuhilfenahme einer speziellen Logik aufbaubar ist, ermöglicht es, die gesamte Funktion in einem Mikroprozessor zu integrieren. Mit den vorgeschlagenen Ausgestaltungen wird jeweils sichergestellt, daß Spannungseinbrüche bei Lastzuschaltungen nur noch auftreten, wenn sich technisch absolut erforderlich sind, bzw. sich absolut nicht vermeiden lassen.

### Beschreibung

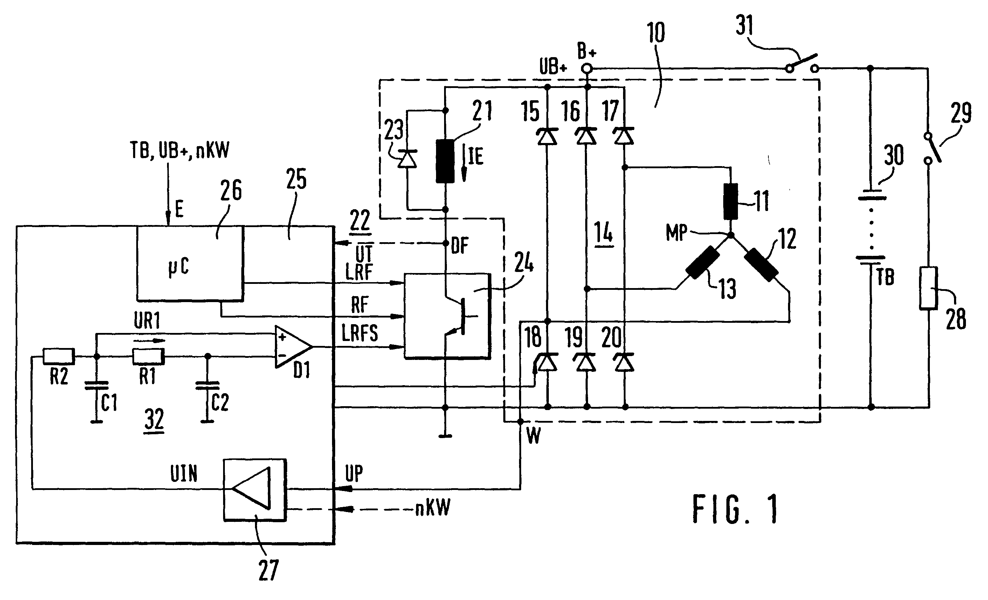

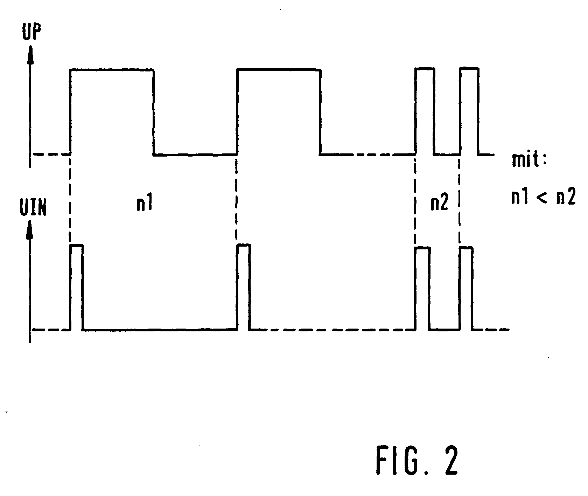

Ein Ausführungsbeispiel der Erfindung ist in Figur 1 der Zeichnung dargestellt und wird in der nachfolgenden Beschreibung näher erläutert. In Figur 2 ist das Phasensignal, das an einer Wicklung des Generators abgreifbar ist und erfindungsgemäß ausgewertet wird, in Abhängigkeit von der Zeit aufgetragen.

### Zeichnung

In der Figur 1 sind die für das Verständnis der Erfindung erforderlichen Bestandteile des Generators, des Spannungsreglers sowie des Fahrzeugbordnetzes dargestellt. Im einzelnen sind vom Generator 10 die Statorwicklungen 11, 12, 13, die an einen gemeinsamen Mittelpunkt MP angeschlossen sind und auf die Gleichrichterbrücke 14 führen, dargestellt. Die Gleichrichterbrücke 14 besteht aus sechs Gleichrichtern, beispielsweise gesteuerten Gleichrichtern 15 bis 20, die an der Klemme B+ die Generatorausgangsspannung UB+ und den Strom IL liefern. Weiterhin ist vom Generator 10 die Erregerwicklung 21 dargestellt, durch die der Erregerstrom IE fließt, der mit Hilfe des Spannungsreglers 22 geregelt wird. Parallel zur Erregerwicklung 21 liegt noch die Freilaufdiode 23.

Der Spannungsregler 22 umfaßt die Leistungsstufe 23 mit dem Regeltransistor. Die Ansteuerung der Leistungsstufe 24 des Spannungsreglers 22 erfolgt mit Hilfe der Steuerstufe 25, die die erforderlichen Ansteuerfunktionen Load-Response-Fahrt LRF, Load-Response-Fahrt-Sperren LRFS sowie die üblichen Regelfunktionen RF zur Ansteuerung des Leistungstransistors des Spannungsreglers liefert. Diese Funktionen werden mit Hilfe eines Mikroprozessors 26 sowie der Schaltung 32 im Steuerteil des Spannungsreglers generiert. Dem Mikroprozessor 26 werden über Eingänge E die nötigen Daten zugeführt, z. B. die Spannung UB+, die Batterietemperatur TB, die Drehzahl der Kurbelwelle nKW usw., die bei der üblichen Spannungsregelung berücksichtigt werden.

Zur Erzeugung-der Load-Response-Fahrt-Sperren-Funktion LRFS dient die im Steuerteil 26 des Reglers enthaltene Schaltung 32, die aus folgenden Bestandteilen besteht: In einer nicht näher spezifizierten Schaltung zur Signalaufbereitung 27 wird das an einer Phase des Generators 10 abgegriffene Phasensignal UP, das ein drehzahlabhängiges Signal ist, zu gleichförmigen Rechteckimpulsen aufbereitet, die mit UIN bezeichnet sind. Sowohl das Phasensignal als auch das aufbereitete Signal sind im übrigen in Figur 2 dargestellt. Der Generatoranschluß, an dem das Phasensignal UP abgegriffen wird, ist mit W bezeichnet. Als Drehzahlsignal könnte auch die Drehzahl der Kurbelwelle nKW verwendet werden.

Das aufbereitete Phasensignal UIN wird der Schaltungsanordnung 32 zur Sperrung der Load-Response-Funktion LRFS zugeführt. Diese Schaltungsanordnung umfaßt zwei in Serie geschaltete Widerstände R1, R2 sowie zwei parallel geschaltete Kondensatoren C1 und C2, wobei C1 zwischen R1 und R2 und C2 an R1 angeschlossen ist. Die Verbindung zwischen dem Widerstand R1 und dem Kondensator C2 führt auf den invertierenden Eingang eines Differenzverstärkers D1, dessen nichtinvertierendem Eingang die am Widerstand R1 abfallende Spannung UR1 zugeführt wird.

Mit der Schaltung, die die Widerstände R1, R2, die Kondensatoren C1, C2 und den Differenzverstärker D1 umfaßt läßt sich die gewünschte Load-Response-Fahrt-Sperrfunktion LRFS realisieren. Ansonsten würde beim Zuschalten eines starken Verbrauchers, der in Figur 1 mit 28 bezeichnet ist, die Load-Response-Fahrt-Funktion aktiviert. Der Verbraucher 28, der über den Schalter 29 mit der Batterie 30 verbindbar ist, bzw. bei geschlossenem Zündschalter 31 auch mit dem Generatoranschluß B+, ist ein Verbraucher mit geringem Widerstand, der bei Zuschaltung den Generator stark belastet. Sofern die Load-Response-Fahrt-Funktion aktiv ist, wird die Anstiegsgeschwindigkeit des Erregerstromes IE nach Zuschalten eines starken Verbrauchers begrenzt. Die Ursache für eine positive Erregerstromänderung ist zum einen ein erhöhter Strombedarf durch Verbraucherzuschaltung und zum anderen eine kleine Drehzahl des Generators, die größere Leistungsabgaben verhindert. Solange die Load-Response-Funktion aktiv ist, entsteht prinzipbedingt ein Spannungseinbruch im Bordnetz. Dieser Spannungseinbruch ist unerwünscht und wird durch die erfindungsgemäß vorgeschlagene Sperrung der Load-Response-Funktion unter gewissen Bedingungen vermieden. Dazu wird mit der aus den Widerständen R1, R2, den Kondensatoren C1, C2 sowie dem Differenzverstärker D1 bestehenden Schaltung aus dem zugeführten Signal UIN eine negative Drehzahländerung erkannt, wobei das Ausgangssignal des Differenzverstärkers D1 die Load-Response-Funktion sperrt. Der Zusammenhang zwischen Drehzahl, Spannungspegel an den Kondensatoren C1 und C2 sowie der Ansteuerung der Load-Response-Funktion ist der folgenden Logiktabelle zu entnehmen:

| Drehzahl | Spannungspegel | LRF-Ansteuerung |
|---|---|---|
| konstant | C1 = C2 → U_{R1} = 0 | freigeben |
| steigend | C1 > C2 → U_{R1} > 0 | freigeben |
| fallend | C1 < C2 → U_{R1} < 0 | sperren |

Wie der Logiktabelle zu entnehmen ist, wird bei konstanter Drehzahl oder bei steigender Drehzahl die Ansteuerung der Load-Response-Fahrt-Funktion freigegeben. Bei fallender Drehzahl wird diese Ansteuerung gesperrt. Bei inaktiver Load-Response-Fahrt-Funktion steigt der Erregerstrom bei Bedarf schnell an, wodurch zwar ein bremsendes Moment auf die Kurbelwelle der Brennkraftmaschine ausgeübt wird, jedoch ein Spannungseinbruch normalerweise vermieden wird.

## Patentansprüche

1. Einrichtung zur Spannungsversorgung bei einem von einer Brennkraftmaschine angetrieben Generator, mit einer Erregerwicklung und einem Spannungsregler, der den durch die Erregerwicklung fließenden Strom zur Konstanthaltung der Ausgangsspannung des Generators regelt, mit Mitteln zur zusätzlichen Begrenzung des Erregerstromes, während des Auftretens vorgebbarer Bedingungen, wobei die Mittel zur zusätzlichen Begrenzung des Erregerstroms eine Load-Response-Fahrt-Funktion umfassen, die vom Steuerteil des Spannungsreglers gebildet wird und in Abhängigkeit von der Drehzahl der Brennkraftmaschine bzw. des Generators gesperrt werden kann, **dadurch gekennzeichnet, daß** die Load-Response-Fahrt-Funktion bei negativer Drehzahländerung gesperrt wird.

2. Einrichtung zur Spannungsregelung nach Anspruch 1, **dadurch gekennzeichnet, daß** die Load-Response-Fahrt-Funktion mit Hilfe einer Schaltungsanordnung gesperrt wird, der die Phasenspannung (UP) des Generators zugeführt wird, wobei die Phasenspannung (UP) in eine Rechteckspannung mit gleichförmigen Pulsen (UIN) gewandelt wird, die über die Serienschaltung der Widerstände (R1 und R2), sowie die parallel liegenden Kondensatoren (C1 und C2) einem Differenzverstärker (D1) zugeführt werden.

3. Einrichtung zur Spannungsregelung nach Anspruch 2, **dadurch gekennzeichnet, daß** der nichtinvertierende Eingang des Differenzverstärkers (D1) mit der Verbindung zwischen den Widerständen (R1, R2) und dem Kondensator (C1) in Verbindung steht und der invertierende Eingang des Differenzverstärkers (D1) mit der Verbindung zwischen dem Widerstand (R1) und dem Kondensator (C2) verbunden ist.

4. Einrichtung zur Spannungsregelung nach einem der vorhergehenden Ansprüche, **dadurch gekennzeichnet, daß** der Spannungsregler der den durch die Erregerwicklung fließenden Strom zur Konstanthaltung der Ausgangsspannung des Generators regelt, auch die Mittel zur zusätzlichen Begrenzung des Erregerstroms und die Mittel zur Sperrung der zusätzlichen Begrenzung des Erregerstroms umfaßt.

5. Einrichtung zur Spannungsregelung nach einem der vorhergehenden Ansprüche **dadurch gekennzeichnet, daß** der Spannungsregler (22) einen Leistungsteil (24) mit einem Leistungstransistor und einen Steuerteil (25) zur Erzeugung der Ansteuersignale für den Leistungsteil (24) umfaßt.

6. Einrichtung zur Spannungsregelung nach einem der vorhergehenden Ansprüche, **dadurch gekennzeichnet, daß** dem Spannungsregler weitere Signale, insbesonders die Drehzahl der Kurbelwelle der Brennkraftmaschine und/oder die Generatorausgangsspannung (UB+) und/oder die Temperatur der Batterie zugeführt werden, wobei diese Größen gegebenenfalls bei der Regelung des Erregerstromes mitberücksichtigt werden.

## Claims

1. Voltage supply device in a generator driven by an internal combustion engine, having an exciter winding and a voltage regulator which regulates the current flowing through the exciter winding in order to keep the output voltage of the generator constant, having means for additionally limiting the exciter current during the occurrence of predefinable conditions, the means for additionally limiting the exciter current comprising a load response travel function which is formed by the control part of the voltage regulator and can be shut off as a function of the rotational speed of the internal combustion engine or of the generator, **characterized in that** the load response travel function is shut off in the case of a negative change in the rotational speed.

2. Voltage regulating device according to Claim 1, **characterized in that** the load response travel function is shut off using a circuit arrangement to which the phase voltage (UP) of the generator is fed, the phase voltage (UP) being converted into a square-wave voltage with uniform pulses (UIN) which are fed to a differential amplifier (D1) via the series circuit of the resistors (R1 and R2) and the capacitors (C1 and C2) which are located in a parallel arrangement.

3. Voltage regulating device according to Claim 2, **characterized in that** the non-inverting input of the differential amplifier (D1) is connected to the connection between the resistors (R1, R2) and the capacitor (C1), and the inverting input of the differential amplifier (D1) is connected to the connection between the resistor (R1) and the capacitor (C2).

4. Voltage regulating device according to one of the preceding claims, **characterized in that** the voltage regulator which regulates the current flowing through the exciter winding in order to keep the output voltage of the generator constant also comprises the means for additionally limiting the exciter current and the means for shutting off the additional limitation of the exciter current.

5. Voltage regulating device according to one of the preceding claims, **characterized in that** the voltage regulator (22) comprises a power component (24) with a power transistor, and a control component (25) for generating the actuation signals for the power component (24).

6. Voltage regulating device according to one of the preceding claims, **characterized in that** further signals, in particular the rotational speed of the crankshaft of the internal combustion engine and/or the generator output voltage (UB+) and/or the temperature of the battery are fed to the voltage regulator, these variables also being taken into account, if appropriate, in the regulation of the exciter current.

## Revendications

1. Installation d'alimentation en tension comportant un générateur entraîné par un moteur à combustion interne, un enroulement d'excitation et un régulateur de tension, qui régule le courant traversant l'enroulement d'excitation pour maintenir constante la tension de sortie fournie par le générateur,
des moyens de limitation supplémentaire du courant d'excitation pendant que se produisent des conditions prédéterminées, ces moyens de limitation supplémentaire du courant d'excitation comprenant une fonction de réponse à la charge en déplacement, formée par la partie de commande du régulateur de tension et qui peut être bloquée en fonction du régime du moteur à combustion interne ou du générateur,
**caractérisée en ce que**
la fonction de réponse à la charge en déplacement est bloquée pour une variation négative de la vitesse de rotation.

2. Installation de régulation de tension selon la revendication 1,
**caractérisée en ce que**
la fonction de réponse à la charge en déplacement est bloquée à l'aide d'un circuit qui reçoit la tension de phase (UP) du générateur, la tension de phase (UP) étant transformée en une tension rectangulaire avec des impulsions de même forme (UIN) qui sont appliquées par le montage en série des résistances (R1, R2) et des condensateurs en parallèle (C1, C2) à un amplificateur différentiel (D1).

3. Installation de régulation de tension selon la revendication 2,
**caractérisée en ce que**
l'entrée non inversée de l'amplificateur différentiel (D1) est reliée à la liaison entre les résistances (R1, R2) et le condensateur (C1) et l'entrée inversée de l'amplificateur différentiel (D1) est reliée à la liaison entre la résistance (R1) et le condensateur (C2).

4. Installation de régulation de tension selon l'une quelconque des revendications précédentes,
**caractérisée en ce que**
le régulateur de tension qui régule le courant traversant l'enroulement d'excitation pour maintenir constante la tension de sortie fournie par le générateur, comprend aussi des moyens de limitation supplémentaire du courant d'excitation et des moyens pour bloquer la limitation supplémentaire du courant d'excitation.

5. Installation de régulation de tension selon l'une quelconque des revendications précédentes,
**caractérisée en ce que**
le régulateur de tension (22) comprend une partie de puissance (24) avec un transistor de puissance et une partie de commande (25) pour générer les signaux de commande de la partie de puissance (24).

6. Installation de régulation de tension selon l'une quelconque des revendications précédentes,
**caractérisée en ce que**
le régulateur de tension reçoit d'autres signaux, notamment la vitesse de rotation du vilebrequin du moteur à combustion interne et/ou la tension de sortie du générateur (UB+) et/ou la température de la batterie, ces grandeurs étant le cas échéant prises en compte pour la régulation du courant d'excitation.
